# EUROPEAN PATENT APPLICATION

(11) **EP 0 906 851 A1**
(43) Date of publication of application: **07.04.1999**
(21) Application number: 98202349.1
(22) Date of filing: 13.07.1998
(51) Int. Cl.: B60Q 11/00

(54) **Method and circuit for detecting a fault in an indicator light**

(30) Priority: 14.07.1997 NL 1006570
(71) Applicant: ECS Electronics N.V., 4825 BL Breda (NL)
(72) Inventor: Huijzers, Bastiaan, 3315 DA Dordrecht (NL)
(74) Representative: Bartelds, Erik

(57) **Abstract**

The invention relates to a method for detecting a fault in a trailer indicator light (12-13) which is connected to an indicator light installation (1) of a tractive vehicle, which indicator light installation (1) comprises an indicator pulse generator (2), a number of indicator lights (5-8) actuated thereby and a malfunction detection circuit. The status of the trailer indicator light (12,13) is herein measured and, if an error condition is determined, one of the indicator lights (7,8) of the vehicle is periodically disabled.

The indicator light of the tractive vehicle can only be disabled for a part of an indicator pulse, so that it still remains visible to other traffic.

The invention further relates to a circuit for performing this method.

## Description

The invention relates to a method for detecting a fault in at least one auxiliary indicator light, for instance on a trailer, which is connected to a main indicator light installation, for instance of a tractive vehicle, which main indicator light installation comprises an indicator pulse generator, at least one main indicator light actuated thereby and a malfunction detection circuit. Such a method is known from the European patent 0 501 014.

Vehicles permitted to use the public highway must be provided with indicator lights, with which a change in the travel direction can be indicated. It is of great importance for road safety that such indicators function properly, and that the driver of a vehicle is alerted in the case of malfunction of one or more indicators, so that he can carry out replacement or repair. Most motor vehicles are provided for this purpose with a so-called flasher unit into which the indicator pulse generator and the malfunction detection circuit are integrated. This flasher unit further contains provisions for increasing the indicating frequency in the case of malfunction of one of the indicator lights. Because an indicator telltale is situated in the interior, generally on the instrument panel of a motor vehicle, which is operated with the indicating frequency, a malfunction is thus made visible to the driver. The malfunction is also easily detectable from outside the vehicle due to the increased frequency with which still functioning lights are flashing.

Situations can be envisaged where extra indicator lights have to be connected onto an indicator light installation, for instance in the case a trailer is coupled to a motor vehicle. Such a trailer is generally provided with a lighting system including indicator lights which is coupled to the electrical system of the tractive vehicle, wherein the indicator lights of the trailer are connected to the indicator light installation of the tractive vehicle. It is important herein that malfunctions in the indicators of the trailer are also made known to the driver of the tractive vehicle.

It is not possible however to make use of the malfunction detection circuit of the tractive vehicle to detect malfunctions in the indicator lights of the trailer, because the problem arises here that, due to the increase in the total number of lights connected to the flasher unit, the normal number of lights still remains connected to the flasher unit even when one of the lights fails, so that the flasher unit does not detect an error condition.

It is of course possible to provide an additional malfunction detection circuit for the extra indicators which, like the malfunction detection circuit of the tractive vehicle, is connected to the indicator pulse generator in order to thus increase the pulse frequency when an indicator light of the trailer malfunctions, but this is a time-consuming and costly business.

In the above mentioned European patent 0 501 014 it is therefore proposed to connect the indicator lights of a trailer indirectly to the indicator light installation of the tractive vehicle via a drive circuit, whereby the presence of these extra indicators remains as it were "concealed" from the indicator light installation and in particular the malfunction detection circuit, and the indicator light installation will thus function normally. Means are herein present in the drive circuit for monitoring the status of the indicator lights of the trailer whereby, when a fault in these indicators is determined, the direct connection between one of the main indicator lights of the tractive vehicle and the flasher unit is broken. This indicator light is then connected via the drive circuit to the indicator light installation so that this will remain in operation. The malfunction detection circuit of the indicator light installation will hereby detect a malfunction since one of the main indicator lights appears to be disabled, whereupon the circuit will respond by increasing the indicating frequency. In this manner it will be apparent to the driver of the tractive vehicle that one of the indicators of his vehicle or the trailer is faulty.

The method known from this older patent has the drawback however that it requires a comparatively complicated circuit which must moreover be individually powered from the battery of the vehicle, this requiring a relatively great effort to install.

The invention therefore has for its object to provide an improved method of the above described type wherein this drawback does not occur. This is achieved according to the invention in that the status of the auxiliary indicator light is measured and, if an error condition is determined, one or the main indicator light is periodically disabled. By periodically disabling the main indicator or one of the main indicators when an error condition of the auxiliary indicator light is determined, this latter does not have to actuated and powered via a drive circuit, which considerably simplifies the installation. This main indicator light herein still remains visible in all cases for other traffic, whereby road safety is enhanced.

The invention is based on the insight that the generally used malfunction detection circuits do not check the operational status of the indicator lights during their entire illumination period, but only for a relatively short period during this illumination period. In order to activate the malfunction detection circuit an indicator light therefore has to be disabled for only this relatively short checking period, and the light can thus function normally for the rest of the illumination period determined by the indicator pulse generator.

Preferably applied variants of the method according to the invention are described in the dependent claims 2-4.

The invention also relates to a circuit for performing the above described method. Such a circuit is characterized according to the invention in that the malfunction detection circuit has means for measuring the status of the auxiliary indicator in addition to means connected controllably thereto for periodic disabling of one or the main indicator light when an error condition is determined.

Preferred embodiments of the malfunction detection circuit according to the invention form the subject-matter of the dependent claims 6-13.

The invention is now elucidated on the basis of a number of embodiments, wherein reference is made to the annexed drawing, in which:
fig. 1 shows a circuit diagram of an indicator light installation of a tractive vehicle and indicator lights of a trailer connected thereto,
fig. 2 shows diagrams of the relation between the indicator pulse generated by the indicator pulse generator and the current through the indicator lights resulting therefrom,
fig. 3 shows a more detailed circuit diagram of a first embodiment of a control unit of the indicator light installation of fig. 1, and
fig. 4 is a view corresponding with fig. 3 of an alternative embodiment of the control unit, wherein the power feed connection is omitted.

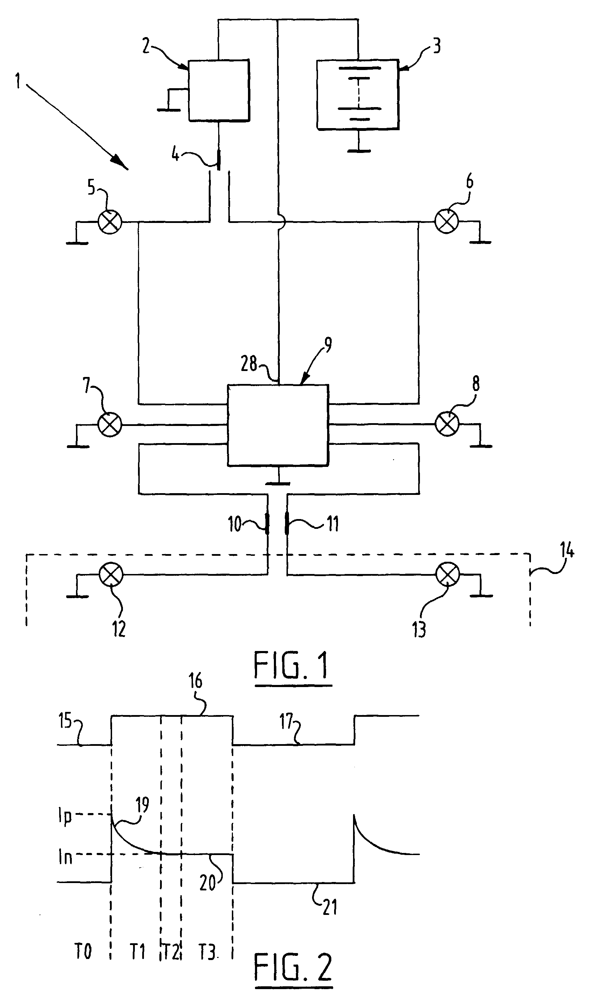

An indicator light installation 1 (fig. 1) comprises a flasher unit which is connected to a power source 3, generally the battery of a motor vehicle. The flasher unit comprises an indicator pulse generator 2 and a malfunction detection circuit, with which the status of indicators 7, 8 is monitored and by which a signal is generated to indicator pulse generator 2 when a malfunction is determined in one of these indicators. Indicator pulse generator 2 is connected via a direction switch 4 to respectively a front and rear indicator light 5, 7 on the left-hand side of the vehicle and a front and rear indicator light 6, 8 on the right-hand side of the vehicle. The front indicators 5, 6 are herein connected directly to direction switch 4, while rear indicators 7, 8 are connected thereto via a control unit 9. The central control unit 9 further has two connections 26, 27 which are connected to contacts 10, 11 on the rear of the vehicle, using which the indicators 12, 13 of a trailer 14 can be connected to indicator light installation 1.

Control unit 9 has a connection 28 which is directly connected to power source 3, a connection 29 which is connected to earth, connections 22, 23 which are connected to the front indicators 5, 6 and to the flasher unit, and connections 24, 25 which are connected to the rear indicators 7, 8. Rear indicators 7, 8 are herein each connected in parallel via a switch 32, 34 to the front indicators 5, 6, while connections 26, 27 for the auxiliary indicators 12, 13 of trailer 14 are connected to drive circuits 35, 36 which are controlled by a circuit 30. This latter is further connected via control lines 31, 33 to the switches 32, 34 which form the connection between rear indicators 7, 8 and indicator pulse generator 2.

Circuit 30 has means for measuring the status of indicators 12, 13 of trailer 14, which status measuring means will become active when the left-hand trailer indicator 12 or the right-hand trailer indicator 13 is activated by operation of the direction switch 4. When it is determined by these status measuring means that the relevant indicator 12 or 13 is faulty, the switch 32 or 34 is switched over via the corresponding control line 31, 33, whereby the rear indicator 7 or 8 of the vehicle is periodically disabled. Disabling of indicator 7 or 8 is detected by the malfunction detection circuit as a malfunction of indicator light installation 1 which results in an error condition, and thereby an increased frequency of indicator pulse generator 2.

So as not to unnecessarily limit the visibility of the vehicle further, which is already reduced due to the loss of indicator light 12 or 13 on trailer 14, the associated indicator 7 or 8 is not disabled completely but only periodically. This is possible because the malfunction detection circuit does not measure the operation of indicators 5, 6, 7 and 8 continuously but likewise only periodically. This has to do with the fact that the current through indicators 5, 6, 7, 8 resulting from an indicator pulse does not follow the indicator pulse evenly, but, as a result of transient phenomena, will display an irregular progression. This is shown in fig. 2 which illustrates how the signal 15 generated by pulse generator 2 is alternately high 16 or low 17. When the output signal of pulse generator 2 goes from low to high, a current will thereby be generated in the circuit which includes indicators 5 and 7 or 6 and 8, depending on the position of direction switch 4. As a result of transient phenomena this current 18 will generally first show a peak 19, wherein the current strength takes on a peak value Iₚ, whereafter the current strength will fall to a nominal value Iₙ, shown by a horizontal part 20 in the diagram. When pulse signal 15 becomes low, the current strength falls back to 0 (horizontal part 21). The malfunction detection circuit is generally adapted to only measure the status of indicators 5, 6, 7 and 8 during the period when the current running therethrough has reached its nominal value Iₙ.

In the shown embodiment this has the result that, during the period T1 in which the current strength decreases from the peak value Iₚ to the nominal value Iₙ, there is no check on the status of indicators 5, 6, 7, 8, but that this check takes place only in for instance the period T2. The disabling means forming part of circuit 30 are now adapted to only disable the indicator 7 or 8 associated with the faulty indicator 12 or 13 of trailer 14 during the period T2 when checking by the malfunction detection circuit takes place. During period T1 the indicator will thus light up, so that surrounding traffic can discern a change of direction by the vehicle, and will be subsequently disabled during period T2 whereby the malfunction detection circuit detects a malfunction and will therefore generate an error signal.

It is of course possible that the malfunction detection circuit will carry out a check on the status of indicators 5, 6, 7, 8 just when the indicator 7 or 8 associated with a faulty trailer indicator 12 or 13 is disabled. No malfunction would in that case be detected. The circuit 30 therefore further has means for monitoring the indicating frequency of the flasher unit, which monitoring means are connected in controlling manner to the disabling means. When now the monitoring means determine that the malfunction detection circuit is not detecting any malfunction while one of the trailer indicators 12 or 13 is faulty, the moment of disabling of indicator 7 or 8 is adjusted. Such an adjustment can take place stepwise, for instance with one step per indicator pulse, up to the moment that the malfunction detection circuit detects disabling of indicator 7 or 8. The thus found disabling moment can be stored if desired and be taken as starting point in subsequent cases.

Measurement of the status of indicator 12 or 13 can take place between successive indicator pulses 16, therefore during the dead period 17. For this status measurement a (for instance pulsating) voltage can be applied across the relevant indicator, wherein a check is made whether current is flowing, or a current can be transmitted though the lamp and it can be determined whether a voltage drop occurs. As stated, this measurement takes place when the indicator pulse 15 is low, so that the status measuring means are in fact in counter-phase to indicator pulse generator 2.

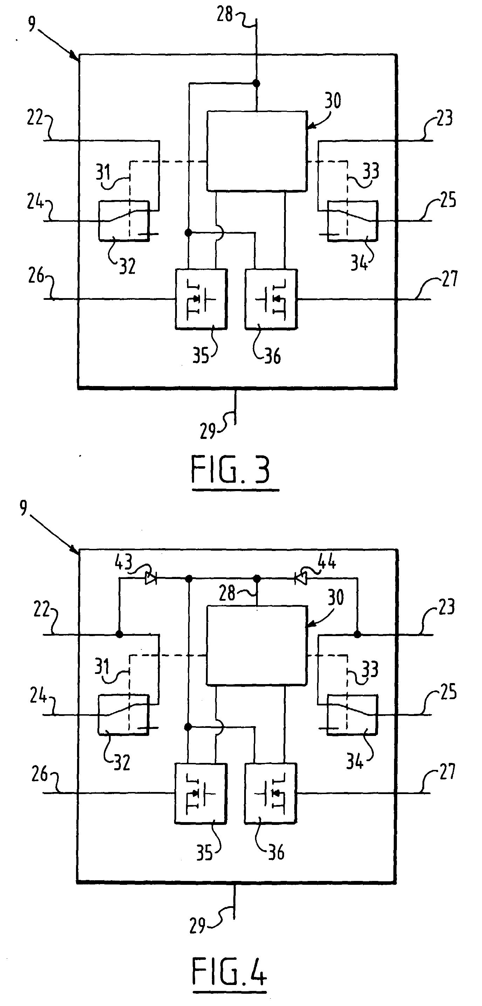

In an alternative embodiment of control unit 9 (fig. 4) the connection to the electrical power source 3 has been omitted. Instead, the drive circuits 35, 36 and the malfunction detection circuit 30 are fed in this embodiment via the connections 22, 23. Diodes 43, 44 are herein arranged between these connections 22, 23 and the different circuits 30, 35, 36. Because in this embodiment no separate power feed line has to be laid from battery 3 to control unit 9, the installation operations are greatly simplified, whereby installation time of the circuit in a vehicle can be greatly reduced. The circuit 30 must then however be adapted here for brief disabling of indicators 12, 13 of trailer 14 during the illumination period T2 of the indicators. This is necessary to provide the flasher unit with the opportunity to check the status of indicators 7, 8 of the tractive vehicle. A malfunction in any of these indicators would otherwise be continually disguised by the presence of the trailer indicators 12, 13 connected in parallel thereto via an associated drive circuit 35, 36.

Although the invention is elucidated above with reference to a number of embodiments, it will be apparent that it is not limited thereto. It would thus be possible to connect the indicators of the trailer to the flasher unit not via drive circuits but simply by parallel connection to the rear indicators of the tractive vehicle. The trailer indicators and/or the associated indicators of the tractive vehicle would then have to be provided herein with a series resistance. This series resistance could be used to measure the status of the associated trailer indicator, wherein a measured current across the resistance could optionally be amplified by an amplifier and then passed on to the circuit.

In addition, the moment of enabling the indicators of the tractive vehicle could for instance be delayed when these indicators are checked at the beginning of the "on" period. Finally, the status of the extra indicators could for instance be detected when they are energized, instead of between two indicator pulses as described. The scope of the invention is therefore defined solely by the appended claims.

## Claims

1. Method for detecting a fault in at least one auxiliary indicator light (12, 13), for instance on a trailer (14), which is connected to a main indicator light installation (1), for instance of a tractive vehicle, which main indicator light installation (1) comprises an indicator pulse generator (2), at least one main indicator light (5, 6, 7, 8) actuated thereby and a malfunction detection circuit, **characterized in that** the status of the auxiliary indicator light (12, 13) is measured and, if an error condition is determined, one or the main indicator light (7, 8) is periodically disabled.

2. Method as claimed in claim 1, **characterized in that** the main indicator light (7, 8) is disabled for at most a part of the duration of an indicator pulse (16).

3. Method as claimed in claim 1 or 2, **characterized in that** the response of the malfunction detection circuit to disabling of the main indicator light (7, 8) is monitored and, if such a response does not occur, the moment of disabling (T2) is adjusted.

4. Method as claimed in any of the claims 1-3, **characterized in that** the measurement of the status of the auxiliary indicator light takes place between successive indicator pulses.

5. Circuit (30) for detecting a fault in at least one auxiliary indicator light (12, 13), for instance on a trailer (14), which is connected to a main indicator light installation (1), for instance of a tractive vehicle, which main indicator light installation (1) comprises an indicator pulse generator (2), at least one main indicator light (5, 6, 7, 8) actuated thereby and a malfunction detection circuit, **characterized in that** the malfunction detection circuit (30) has means for measuring the status of the auxiliary indicator light (12, 13) in addition to means connected controllably thereto for periodic disabling of one or the main indicator light (7, 8) when an error condition is determined.

6. Malfunction detection circuit (30) as claimed in claim 5, **characterized in that** the disabling means are adapted to disable the main indicator light (7, 8) for at most a part of the duration of an indicator pulse (16).

7. Malfunction detection circuit (30) as claimed in claim 5 or 6, **characterized by** means connected in controlling manner to the disabling means for monitoring the malfunction detection circuit, wherein the disabling means are adapted to adjust the disabling moment (T2) under the control of the monitoring means.

8. Malfunction detection circuit (30) as claimed in any of the claims 5-7, **characterized in that** the status measuring means operate in counter-phase to the indicator pulse generator (2).

9. Malfunction detection circuit (30) as claimed in any of the claims 5-7, **characterized in that** the status measuring means operate in phase with the indicator pulse generator.

10. Malfunction detection circuit (30) as claimed in any of the claims 5-9, **characterized in that** the auxiliary indicator light (12, 13) is connected to the main indicator light installation (1) via a drive circuit (35, 36), and the malfunction detection circuit (30) is connected in controlling manner to the drive circuit (35, 36).

11. Malfunction detection circuit (30) as claimed in any of the claims 5-9, **characterized in that** the auxiliary indicator light (12, 13) is connected in parallel to one or the main indicator light (7, 8) and the status measuring means comprise a measuring resistance connected to the auxiliary indicator light (12, 13) and/or the main indicator light (7, 8).

12. Malfunction detection circuit (30) as claimed in any of the claims 5-11, **characterized by** a power feed line (28) connecting the malfunction detection circuit (30) to the main indicator light (7, 8).

13. Malfunction detection circuit (30) as claimed in any of the claims 5-12, **characterized in that** the main indicator light installation (1) comprises at least two indicator lights (5, 6, 7, 8) in addition to a direction switch (4) with which at least one (5, 6, 7, 8) of the indicator lights (5, 6, 7, 8) can be connected as desired to the indicator pulse generator (2).
